# DEMANDE DE BREVET EUROPEEN

(11) **EP 1 239 443 A1**
(43) Date de publication de la demande: **11.09.2002**
(21) Numéro de dépôt: 02290570.7
(22) Date de dépôt: 07.03.2002
(51) Int. Cl.: G09G 3/22, H01J 3/02, H01J 21/10

(54) **Ercan plat à émission électronique et à dispositif integré de commande d'anode**

(30) Priorité: 09.03.2001 FR 0103236
(71) Demandeur: COMMISSARIAT A L'ENERGIE ATOMIQUE, 75752 Paris Cédex 15 (FR)
(72) Inventeur: Nicolas, Pierre, 38120 Saint Egreve (FR)
(74) Mandataire: Signore, Robert

(57) **Abrégé**

L'invention concerne un écran (1) plat à émission électronique comportant un premier substrat (2) sur lequel sont disposées une cathode d'émission (4) et une grille d'extraction d'électrons (8), un deuxième substrat (12) en regard du premier substrat (2) sur lequel est disposée une anode (14) destinée à collecter les électrons émis par la cathode (4), et un circuit électronique de commande de la tension d'anode (14) comportant au moins un composant de commutation (18, 20).

Selon l'invention, le composant de commutation (18, 20) est intégré par construction dans le premier substrat (2) et dans le deuxième substrat (12) de l'écran (1).

## Description

### Domaine technique

L'invention se situe dans le domaine des écrans plats fonctionnant selon des principes physiques d'émission utilisant des cathodes chaudes, des micropointes à effet de champ ou des sources planes d'électrons de type graphite ou carbone (nanotubes) etc.

Plus particulièrement, l'invention concerne un écran plat à émission électronique comportant un premier substrat sur lequel sont disposées une cathode d'émission et une grille d'extraction d'électrons, un deuxième substrat en regard du premier substrat sur lequel est disposée une anode destinée à collecter les électrons émis par la cathode, et un circuit électronique de commande de la tension d'anode comportant au moins un composant de commutation de puissance.

L'invention concerne également un transistor à micropointes.

### Etat de la technique antérieure

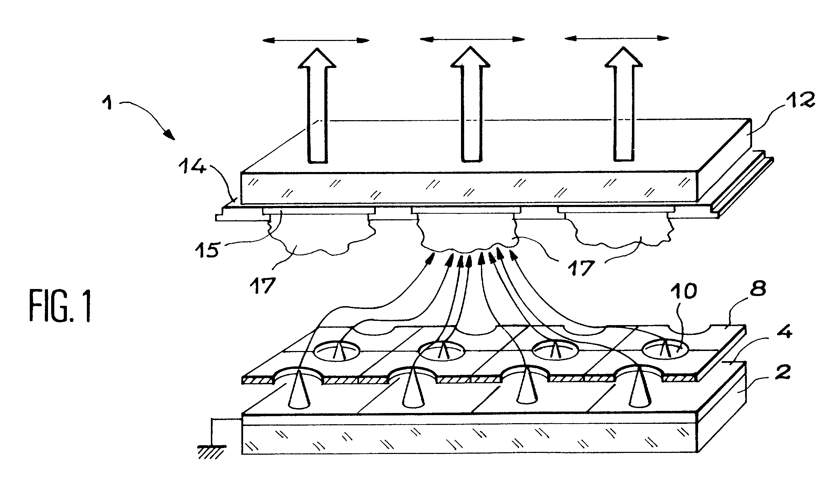

La figure 1 représente schématiquement un écran plat 1 à micropointes 6 connu comportant un premier substrat 2 sur lequel est disposée une cathode 4 muni de micropointes 6 pilotables électriquement par une tension V_{cathode} (mise à la masse dans l'exemple de la figure 1) et une grille 8 pilotable électriquement par une tension V_{grille} et pourvue de trous 10 aux emplacements des micropointes 6. Le premier substrat 2 peut être en verre ou en silicium ou en tout matériau approprié. L'écran plat 1 comporte également un deuxième substrat 12 en regard du premier substrat 2 et sur lequel est disposée une anode 14 constituant la surface émissive de l'écran 1. Des conducteurs électriques 15 transparents ou non sont disposés sur la face interne de l'anode 14. Des matériaux luminophores 17 sont déposés sur ces conducteurs électriques 15.

Dans ce dispositif, la cathode 4 constitue la source d'électrons et l'anode 14 collecte ces électrons. L'émission des électrons par les micropointes 6 est contrôlée par la différence de potentiel appliqué entre la grille d'extraction 8 et la cathode 4.

En pratique, on réalise une cathode matricielle disposant de n lignes de conducteurs de grille et de p colonnes de conducteurs cathodiques pilotant les micropointes. Les signaux électriques appliqués à ces n lignes et p colonnes permettent alors l'affichage d'images de (n*p) points.
La collection des électrons issus des micropointes 6 est réalisée en les accélérant à l'aide de la "haute tension" appliquée sur les conducteurs 15 de l'anode. L'émission lumineuse est assurée par les matériaux luminophores 17 sous l'impact des électrons reçus.

Pour réaliser l'écran 1, les premier et deuxième substrats 2 et 12 sont scellés et le vide est réalisé dans l'enceinte ainsi obtenue. De nombreuses variantes technologiques d'anodes sont disponibles. A titre d'exemple, on citera :
- des anodes monofil ou multifils pour écrans monochromes ou trichromes décrites dans la publication du CEA dans le document « Recent development on microtips display at LETI. R.MEYER. LETI/CEA ».
- des anodes réflectives pour structure à cathode transparente décrites dans le brevet N° FR 2 633 763 A du CEA.

Dans toutes ces variantes, on retrouve toujours la nécessité d'appliquer à l'anode une haute tension qui est généralement pulsée. La commutation de cette haute tension est nécessaire par exemple pour la génération de sous-trames couleur temporelles et pour la régénération de l'écran.

La génération de sous-trames couleur temporelles est une méthode de contrôle de la couleur basée sur un adressage séquentiel des pistes d'anode porteuses de luminophores rouges, verts et bleus. Cet adressage séquentiel, est réalisé à une fréquence suffisamment élevée, de sorte que les couleurs de base, générées dans chacune des sous-trames d'un temps image se "fondent" ensemble pour l'oeil de l'observateur.

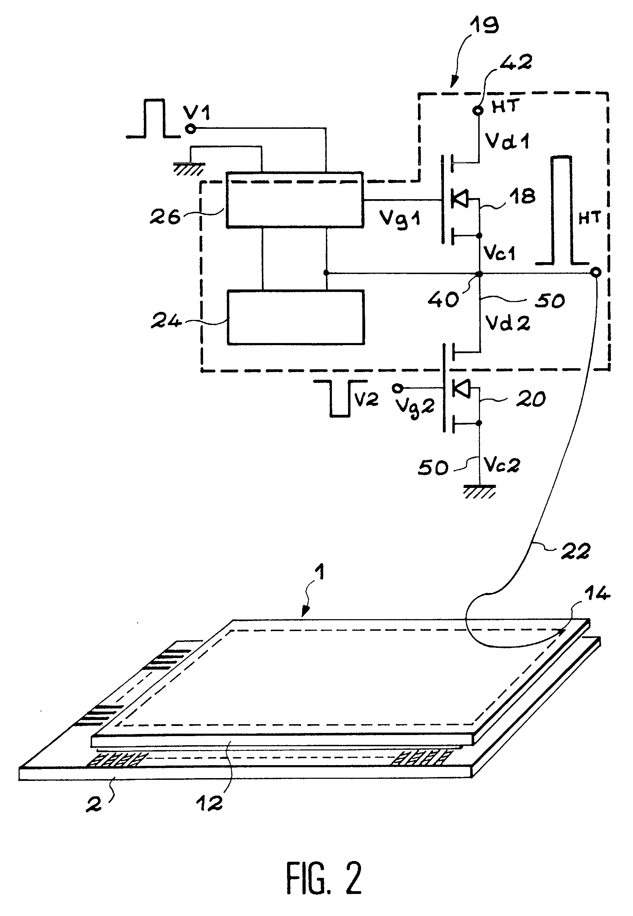

La figure 2 représente un écran plat 1 de l'art antérieur dans lequel l'anode 14 est pilotée par un circuit push-pull 19, disposé à l'extérieur de l'écran 1, et utilisant des transistors haute tension de commutation 18, 20. Ce circuit est relié à l'anode émissive 12 par un conducteur 22. Sur ce schéma, les circuits électroniques de pilotage des lignes et des colonnes de la cathode 2 ne sont pas représentés puisque sans relation avec l'invention. Le circuit 19 de pilotage des transistors 18, 20 comporte une source de tension 24 délivrant une tension Vdd et un opto-coupleur 26. Les signaux de commande logique, et donc basse tension de ce circuit, sont symbolisés par les entrées v1 et v2.

Pour réaliser une régénération de l'écran, le procédé de commande consiste à prévoir des phases de régénération pendant lesquelles une partie au moins des conducteurs de l'anode est au potentiel bas et les micropointes de la cathode sont polarisées dans un état d'émission. Ce mode de commande supprime certains problèmes de dérive de couleurs.

La figure 3 est un chronogramme représentant un exemple de signal à appliquer à l'anode pour générer des sous-trames de couleur temporelles.

La figure 4 est un chronogramme représentant un exemple de signal à appliquer à l'anode pour réaliser la régénération de l'écran 1.

La figure 5 un chronogramme représentant les signaux logiques v1 et v2 permettant d'obtenir la tension de commande d'anode de la figure 4.

Dans tous les cas, il est nécessaire de commuter la tension d'anode au moyen d'un circuit de commutation haute tension.

Plusieurs solutions sont utilisées à cet effet parmi lesquelles les montages de pilotage à liaison capacitive, les montages à pompe de charge, etc. Ces variations de mode de pilotage, ne change cependant pas le principe du circuit "push-pull" des transistors à canal N. On trouve aussi une variante de ce push-pull qui utilise deux transistors de type complémentaires, un canal N et un canal P. Ce circuit est surtout utilisé en basse tension, les transistors à canal P ayant une tenue en tension inférieure à celle des transistors à canal N.

Quelle que soit la méthode de pilotage d'anode utilisée, l'évolution technologique des écrans à émission électronique conduit, pour augmenter leur brillance, à augmenter les tensions d'anode vers les kilovolts voire les dizaines de kilovolts. La commutation des tensions d'anode situées dans ces domaines nécessite alors l'utilisation de transistors spéciaux rares et chers dans des montages complexes et encombrants. A titre illustratif, pour commuter des tensions de 6 kilovolts, il faut réaliser un circuit utilisant des schémas avec plusieurs transistors HT de type 1.6 kilovolts. Outre l'encombrement de ces montages, ils nécessitent des précautions d'implantation importantes compte tenu des valeurs de tension manipulées à l'extérieur de l'écran.

Le but de l'invention est de pallier les inconvénients cités ci-dessus.

Un autre but de l'invention est de simplifier la conception des circuits de commande des écrans plats et d'en réduire l'encombrement.

### Exposé de l'invention

Selon l'invention, le composant de commutation de puissance du circuit électronique de commande de la tension d'anode est intégré par construction dans les premier et deuxième substrats de l'écran.
Selon l'invention, ledit composant de commutation de puissance est un transistor haute tension ayant une première électrode intégrée dans le premier substrat, une deuxième électrode intégrée dans le deuxième substrat, et une troisième électrode intégrée dans la grille d'extraction.

Selon l'invention, la cathode comporte des colonnes conductrices supportant des micropointes et la grille comporte des lignes conductrices perforées croisant lesdites colonnes conductrices aux emplacements desdites micropointes.

Selon l'invention, l'anode constitue la surface émissive de l'écran et comporte au moins une surface conductrice sur laquelle sont déposés des matériaux luminophores.

Selon l'invention, le circuit électronique de commande de la tension d'anode est du type push-pull et comporte en outre un deuxième transistor ayant une première électrode intégrée dans le premier substrat, une deuxième électrode intégrée dans le deuxième substrat et reliée électriquement à la première électrode du premier transistor, et une troisième électrode de contrôle intégrée dans la grille d'extraction.

Selon l'invention, le transistor équipant le circuit de commande de la tension d'anode comporte un premier substrat sur lequel sont disposées une première électrode et une grille de commande, un deuxième substrat, en regard du premier substrat, sur lequel est disposée une deuxième électrode destinée à collecter les électrons émis par la première électrode.

Préférentiellement, la première électrode constituant la cathode comporte des colonnes conductrices supportant des sources d'électrons, la grille de commande comporte des lignes conductrices perforées croisant lesdites colonnes conductrices aux emplacements desdites sources d'électrons et la deuxième électrode comporte au moins une surface conductrice disposée en regard desdites sources d'électrons.

Selon l'invention, la cathode est une source à micropointes.

Selon l'invention, la cathode est une source à nanotubes.

L'écran selon l'invention comporte un module de commande logique comprenant une source basse tension et un coupleur opto-électronique.

Selon l'invention, le module de commande logique comporte une pompe à charge isolée galvaniquement de l'écran par un condensateur C.

### Brève description des figures

D'autres caractéristiques et avantages de l'invention ressortiront de la description qui va suivre, prise à titre d'exemple non limitatif, en référence aux figures ci-dessous dans lesquelles :
- La figure 1, décrite précédemment, représente schématiquement un écran à micropointe de l'art antérieur ;
- la figure 2, décrite précédemment, représente l'écran plat de la figure 1 relié à un circuit externe de commande de la tension d'anode.

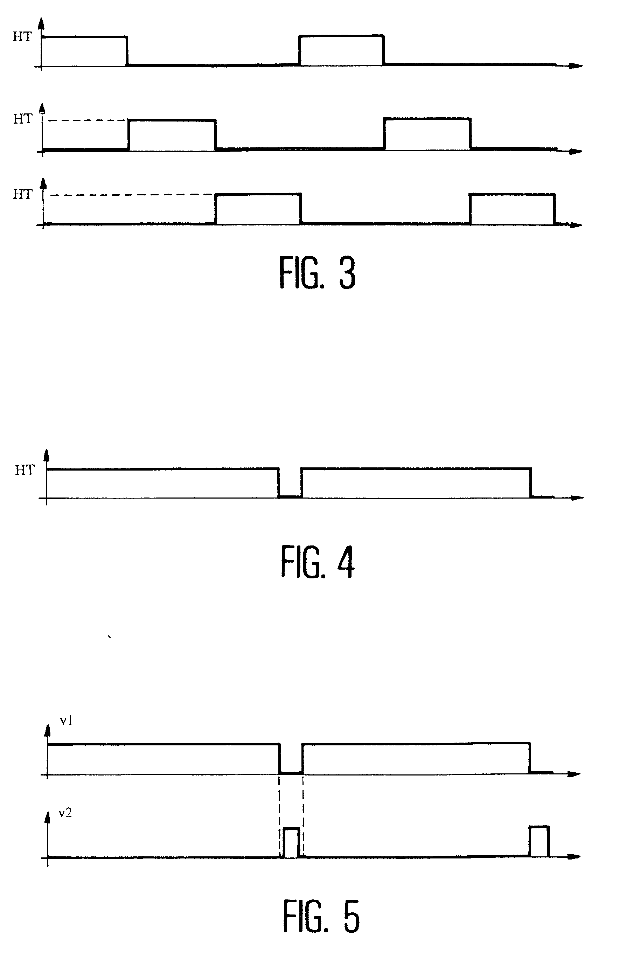

- la figure 3 décrite précédemment représente un chronogramme illustrant une haute tension appliquée à l'anode de l'écran plat de la figure 1 pour générer des sous-trames couleur temporelles ;
- la figure 4 décrite précédemment représente un chronogramme illustrant une haute tension appliquée à l'anode de l'écran de la figure 1 pour régénération d'écran ;
- la figure 5 décrite précédemment représente les signaux logiques de commande des transistors du circuit de la figure 2.

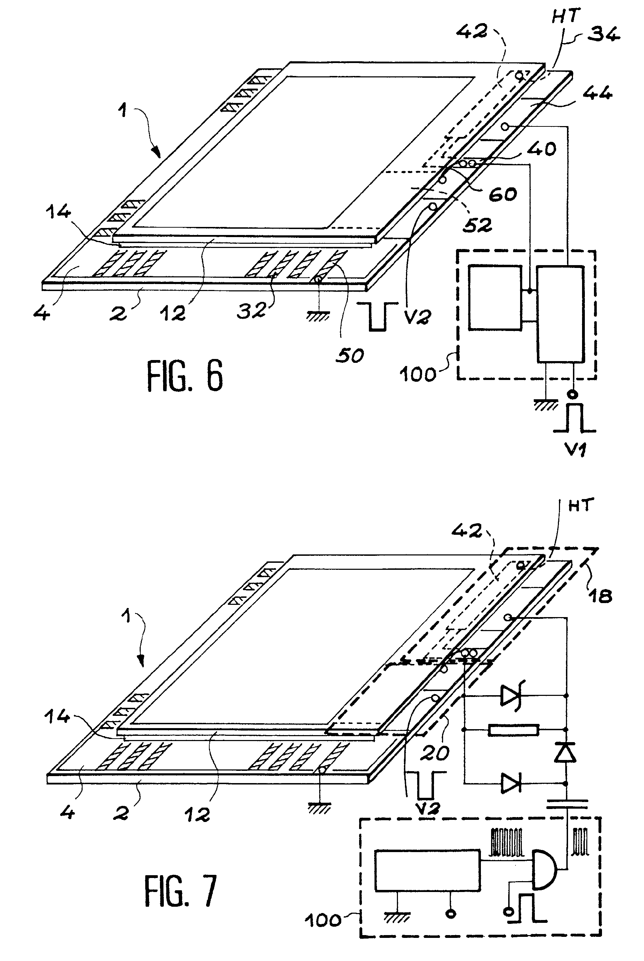

- la figure 6 illustre schématiquement un premier mode de réalisation d'un écran à micropointes selon l'invention ;
- la figure 7 illustre schématiquement un deuxième mode de réalisation d'un écran à micropointes selon l'invention ;

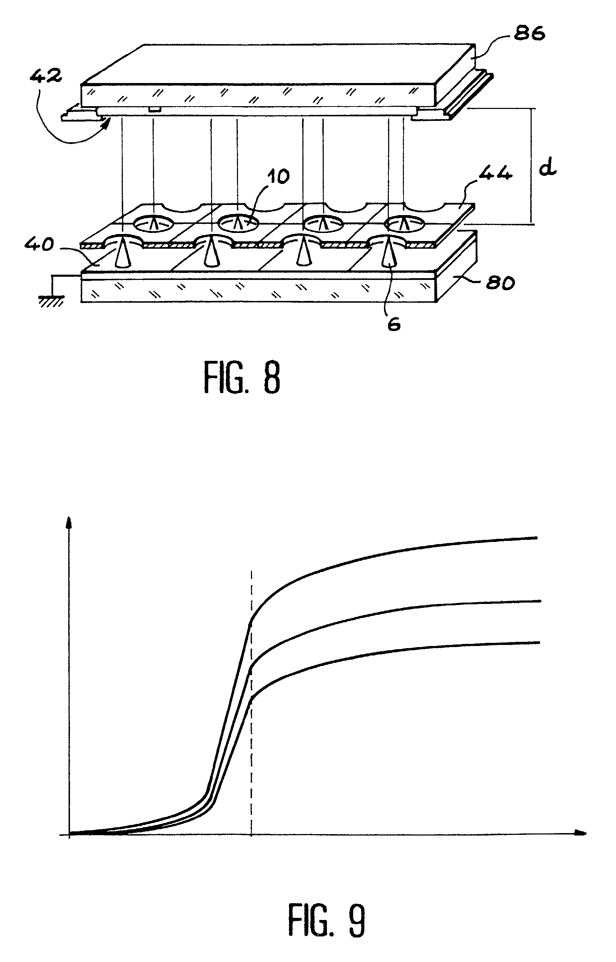

- la figure 8 illustre schématiquement un transistor de commande de la tension d'anode d'un écran selon l'invention ;
- la figure 9 représente les caractéristiques courant-tension d'un transistor à micropointes selon la figure 8 ;

### Description détaillée de modes de réalisation de l'invention :

Dans la suite de la description, les éléments communs à l'écran de l'art antérieur et à l'écran de l'invention seront désignés par les mêmes références.

La figure 6 représente un premier mode de réalisation d'un écran plat à micropointes 1 selon l'invention comportant un premier substrat 2 sur lequel est disposée une cathode 4 comportant des micropointes 6 (voir figure 1) disposées en lignes et en colonnes. Une grille d'extraction d'électrons 8, permet d'appliquer une tension suffisante aux micropointes 6 pour en extraire des électrons. Un deuxième substrat 12 en regard du premier substrat 2 supporte une anode 14 recevant une haute tension HT destinée à accélérer les électrons libérés par les micropointes 6. La haute tension HT est pilotée par un circuit push-pull comportant un premier transistor 18 et un deuxième transistor 20 totalement intégrés dans le premier substrat 2 et dans le deuxième substrat 12 de l'écran 1.

La figure 7 représente un deuxième exemple de réalisation de l'invention dans lequel les deux transistors micropointes 18 et 20 restent inchangés. Seule la partie logique de commande 100 est réalisée à l'aide d'une pompe de charges qui assure l'isolation galvanique de la logique par rapport à la haute tension par l'intermédiaire de la capacité C.

Dans ces deux exemples de réalisation, le transistor 18 a une première électrode 40 intégrée dans une première zone du premier substrat 2, une deuxième électrode 42 intégrée dans une deuxième zone du deuxième substrat 12, et une troisième électrode 44 intégrée dans une portion de la grille d'extraction 8 située entre lesdites première et deuxième zone.

Le transistor 20 a une première électrode 50 intégrée dans une troisième zone du premier substrat 2, une deuxième électrode 52 intégrée dans une quatrième zone du deuxième substrat 12, et une troisième électrode 54 intégrée dans une deuxième portion de la grille d'extraction 8 située entre la trosième zone du premier substrat 2 et la quatrième zone du deuxième substrat 12.
La première électrode 40 du premier transistor 18 est reliée électriquement à la deuxième électrode 52 du deuxième transistor 20 par un fil conducteur 60. Il est possible de choisir d'autres solutions technologiques, pour assurer cette connexion, comme par exemple une interconnexion sous vide à l'intérieur de l'écran 1.

La figure 8 représente un schéma de la structure des transistors 18 et 20 permettant de mettre en évidence la similitude entre la structure des transistors 18, 20 et celle de l'écran 1.

Le transistor, 18 (respectivement 20) comporte un premier substrat semi-conducteur 80 sur lequel sont disposées la première électrode 40 et une grille de commande 44 qui est une portion de la grille d'extraction 8 de l'écran 1. Un deuxième substrat semi-conducteur 86, disposé en regard du premier substrat semi-conducteur 80, supporte une deuxième électrode 42 destinée à collecter les électrons émis par des micropointes 6 disposées en lignes et en colonnes sur la première électrode 40. La grille de commande 44 comporte des lignes conductrices perforées croisant les colonnes conductrices de la première électrode 40 aux emplacements des micropointes 6.

Dans les exemples de réalisation des figures 6 et 7 décrits précédemment, les substrats semi-conducteurs 80, et 86 font partie intégrante respectivement des substrats 2 et 12 de l'écran 1. Les électrodes des transistors 18, 20 sont réalisées dans ces substrats.

La figure 9 représente les caractéristiques courant-tension d'un transistor 18, 20.

Dans la pratique, de tels transistors à micropointes se différencient des transistors MOSFET classiques par leurs tensions de seuil V(grille-cathode)₀ et par la tension de saturation V(anode-cathode)ₛₐₜ qui sont aujourd'hui de quelques dizaines de volts plutôt que de quelques volts pour des transistors classiques MOSFET. La tenue en tension de ces transistors à micropointes est limitée par le vide résiduel entre anode et cathode. On se retrouve donc avec une tenue en tension des transistors qui est celle de l'écran à piloter puisque ces transistors sont intégrés à la structure même de l'écran 1. Le pilotage de l'anode 14 de l'écran 1 par les transistors à micropointes 18, 20, peut être réalisé en conservant le circuit push-pull classique. Compte tenu des tensions de seuil de quelques dizaines de volts, la seule adaptation requise sera de fournir une tension de commande Vdd suffisante, entre 10 V et 100 Volts au maximum, pour que, en prenant en considération la taille des transistors à micropointes, on dispose du courant nécessaire à la commutation de l'anode de l'écran 1 en un temps requis.
Pour fixer les idées, des spécifications techniques typiques de pilotage d'un écran 1 de 1dm² sous Va =3 kV sont présentées ci dessous.
Capacité d'anode : Ca = 330 pF.
Temps de commutation anode requis = tc = 100 µs.
Tenir ce temps de commutation nécessite un courant crête de sortie des transistors HT de 10 mA pendant les 100 µs nécessaires à la commutation des anodes. Un tel courant sera facilement délivré par un transistor à micropointes de quelques 10 mm², soit une surface négligeable devant la surface totale de l'écran.
La réalisation pratique des transistors à micropointes est facilitée par le fait que la structure technologique de ces transistors est plus simple que celle d'un écran.
On notera que sur l'écran 1, il conviendra de prendre des précautions d'implantation pour assurer l'isolement galvanique des zones sur lesquelles sont intégrées les électrodes.

Seule la partie logique de commande 40 reste à l'extérieur de l'écran 1. C'est la partie basse tension constituée de la source de tension 24 du coupleur optoélectronique 26. Ce pilotage externe basse tension, reste référencé à la source du transistor 18 par le fil de liaison à la connexion Vcl.
La commutation de la haute tension, est désormais assurée par les transistors à micropointes 18, 20 intégrés à la structure technologique de l'écran 1.

## Revendications

1. Écran plat (1) à émission électronique comportant un premier substrat (2) sur lequel sont disposées une cathode d'émission (4) et une grille d'extraction d'électrons (8), un deuxième substrat (12) en regard du premier substrat (2), sur lequel est disposée une anode (14) destinée à collecter les électrons émis par la cathode (4), et un circuit électronique (19) de commande de la tension d'anode (14) comportant au moins un composant de commutation (18, 20), **caractérisé en ce que** le composant de commutation (18, 20) est intégré par construction dans le premier substrat (2) et dans le deuxième substrat (12) de l'écran (1).

2. Écran selon la revendication 1, **caractérisé en ce que** ledit composant de commutation (18, 20) est un transistor HT ayant une première électrode (40, 50) intégrée dans le premier substrat (2), une deuxième électrode (42, 52) intégrée dans le deuxième substrat (12), et une troisième électrode (44, 54) intégrée dans la grille d'extraction (8).

3. Écran selon la revendication 1, **caractérisé en ce que** l'anode (14) constitue la surface émissive de l'écran (1) et comporte au moins une surface conductrice (15) sur laquelle sont déposés des matériaux luminophores (17).

4. Écran selon la revendication 2, **caractérisé en ce que** la cathode (4) comporte des colonnes conductrices (32) supportant des sources d'électrons (6), et **en ce que** la grille (8) comporte des lignes conductrices perforées croisant lesdites colonnes conductrices aux emplacements desdites sources (6).

5. Écran selon la revendication 4, **caractérisé en ce que** la cathode (4) est une source à micropointes.

6. Écran selon la revendication 4, **caractérisé en ce que** la cathode (2) est une source à nanotubes.

7. Écran selon l'une des revendications 1 à 6, **caractérisé en ce que** le circuit électronique (19) est du type push-pull et comporte en outre un deuxième transistor (20) ayant une première électrode (50) intégrée dans le premier substrat (2), une deuxième électrode (52) intégré dans le deuxième substrat (12) et reliée électriquement à la première électrode (50) du premier transistor (18), et une troisième électrode de contrôle (54) intégrée dans la grille d'extraction (8) de l'écran (1).

8. Écran selon l'une des revendications 1 à 7, **caractérisé en ce qu'**il comporte en outre un module de commande logique (100) comportant une source de basse tension Vdd (24) et un coupleur opto-électronique (26).

9. Écran selon la revendication 8, **caractérisé en ce que** le module de commande logique (100) comporte une pompe de charge isolée galvaniquement de l'écran (1) par un condensateur C.

10. Transistor, **caractérisé en ce qu'**il comporte un premier substrat semi-conducteur (80) sur lequel sont disposées une première électrode (40) et une grille de commande (44), un deuxième substrat (86), en regard du premier substrat (80), et sur lequel est disposée une deuxième électrode (42) destinée à collecter les électrons émis par la première électrode (40).

11. Transistor selon la revendication 10, **caractérisé en ce que** la première électrode (40) comporte des micropointes (6) disposées en lignes et en colonnes, la grille de commande (44) comporte des lignes conductrices perforées croisant les colonnes de la première électrode (40) aux emplacements desdites micropointes (6), la deuxième électrode (42) comporte au moins une surface conductrice disposée en regard desdites micropointes (6).
